# EUROPEAN PATENT SPECIFICATION

(11) **EP 1 615 974 B1**
(45) Date of publication and mention of the grant of the patent: **04.04.2007**
(21) Application number: 04726128.4
(22) Date of filing: 07.04.2004
(51) Int. Cl.: C09D 5/16, A01N 37/18, A01N 37/20, A01N 37/36, A01N 43/24, A01N 47/06, A01N 47/08

(54) **NON-TOXIC COATING COMPOSITION, METHODS OF USE THEREOF AND ARTICLES PROTECTED FROM ATTACHMENT OF BIOFOULING ORGANISMS**
NICHTTOXISCHE BESCHICHTUNGSZUSAMMENSETZUNG, VERWENDUNGSVERFAHREN UND GEGEN DIE ANLAGERUNG VON BIOFOULING-ORGANISMEN BEHANDELTE GEGENSTÄNDE
COMPOSITION DE REVETEMENT NON TOXIQUE, SES PROCEDES D'UTILISATION ET OBJETS PROTEGES CONTRE LA FIXATION D'ORGANISMES FAVORISANT L'ENCRASSEMENT BIOLOGIQUE

(30) Priority: 10.04.2003 EP 03008352
(43) Date of publication of application: 18.01.2006
(60) Divisional application: 07100751.2
(73) Proprietor: Symrise GmbH & Co. KG, 37603 Holzminden (DE)
(72) Inventor: PELZER, Ralf, 37699 Fürstenberg (DE); WÖHRLE, Ingo, 37603 Holzminden (DE)
(74) Representative: Eisenführ, Speiser & Partner
(86) International application number: PCT/EP2004/003710
(87) International publication number: WO 2004/090052

(56) References cited:
- WO-A-00/63737
- WO-A-94/07477
- WO-A-99/13734
- US-B1- 6 267 974
- US-B1- 6 391 886
- US-B1- 6 627 233
- PATENT ABSTRACTS OF JAPAN vol. 2000, no. 13, 5 February 2001 (2001-02-05) & JP 2000 290151 A (SUNSTAR INC), 17 October 2000 (2000-10-17)
- PATENT ABSTRACTS OF JAPAN vol. 1999, no. 11, 30 September 1999 (1999-09-30) & JP 11 152217 A (KAO CORP), 8 June 1999 (1999-06-08)

## Description

The present invention relates to non-toxic coating compositions comprising active ingredients which provide protection to surfaces coated therewith from attachment of various biofouling organisms. These compositions are advantageously used in paint, varnish and sealant formulations.

The present invention in particular relates to non-toxic coating compositions comprising a mixture of (i) menthol and/or isopulegol and (ii) at least one further active ingredient (as further defined below).

Biocides are commonly used in a variety of coating materials having diverse applications. In marine paints, for example, biocides protect underwater structures against attachment of a wide range of biofouling organisms, such as algae, barnacles, ship worms and other aquatic nuisance species. In lakes and rivers, biocides are used to protect underwater structures from freshwater organisms, such as zebra mussels. It has been found that microorganisms, their viscous, bio-organic product and absorbed organic matter constitute a tenacious slime which forms on the surfaces of submerged structures. The initial organisms in this fouling sequence are bacteria, followed by a biotic progression of diatoms, hydrids, algae, bryozoans, protozoans and finally macrofoulants. Macrofoulants tend to be rugophilic, i.e., settling on roughened surfaces in preference to smooth surfaces.

The fouling of ship bottoms is a longstanding problem, which contributes to speed reduction and increased fuel consumption. The problem of fouling is not limited to ships, however, but extends to other underwater structures, as well. Buoys can shift due to the excessive weight of fouling organisms. Wood pilings in berthing facilities undergo structural weakening and ultimate destruction due to ship worm and fungal attack. The fouling of intake screens of municipal water supply systems can lead to reduced flow rates and accelerated corrosion. Concrete or ferro-cement structures, e.g., dams, are also adversely affected by biofouling organisms.

It is understood by those of skill in the art that a marine coating must be water resistant in order to provide practical and effective protection. The expression "water resistant," as used in describing the composition of the invention, refers to its ability to provide a durable, protective barrier that can effectively withstand hydrolytic attack and is essentially impermeable to water. Water resistance is intrinsically important to marine coatings because, for example, it is prohibitively expensive to re-coat most items in marine service, as they must be put into drydock or otherwise removed from the water in order to be re-coated. It is also desirable, for example, to minimize the time and expense of cleaning fouling organisms from the coated surface. The protection provided by a marine coating, therefore, whether it be against corrosion, fouling, abrasion, etc., should be effective over a period of at least months, and, ideally, over at least several years. A coating composition that is not water resistant would be short lived in the water rather than meeting the performance criteria of a marine coating.

The majority of commercial anti-fouling coatings include organometallic compounds which are potent biocides that leach over time from the coating material. Tributyltin (TBT), for example, is known to be highly toxic to shellfish.

Anderson and Dally, Oceans '86, IEEE Publication #86 CH2363-0 (1986). Acute toxicity in invertebrates and vertebrates occurs at concentrations as low as 1 µg (micrograms) per liter. Laughlin et al., Mar. Ecol. Prog. Ser., 48: 29-36 (1988). Cuprous oxide and zinc oxide, which are other commercially used antifoulants, also function by releasing heavy metals, i.e., copper and zinc, into the marine environment.

In latex architectural paints and wood stains, biocides provide in-can protection against microbiological contamination that can cause odor and changes in viscosity and color, and protect the dried film and underlying substrate from damaging microorganisms. Such coating materials must likewise be water resistant in order to provide effective protection to coated surfaces.

Biocides are also conventionally utilized in elastomeric coatings, adhesives, caulks, glazing compounds, joint cements and the like, which are also water resistant.

Because certain biocides currently used in the above-mentioned products have been shown to be ecologically harmful, a number of international agencies, whose missions include monitoring environmental quality, are urging the curtailment and eventual termination of their manufacture and use. A proposal has been made by the International Maritime Organization (IMO), for example, that all antifoulant coatings that contain TBT, as well as other organotin compounds which have a toxic effect on a wide range of marine organisms, would be banned worldwide.by the year 2003. Consequently, manufacturers of such products are faced with the prospect of changing existing formulations to include alternative agents that are, at once, effective in preventing attachment and growth of biofouling organisms and environmentally benign. Other criteria that must be taken into account in developing acceptable substitutes for ecologically harmful biocides include chemical compatibility with other components in the coating composition, physical compatibility with the dried film and substrate to which the coating is applied, the safety of those handling or using the substitute agents themselves or coating materials containing them and the cost of their production.

WO 01/95718 relates to non-toxic coating compositions which provide protection to surfaces coated therewith from attachment of various biofouling organisms using mainly terpenes and terpene derivatives, in particular (-)-menthol, (-)-trans-p-menthan-3,8-diol, (-)-menthyl chloride, 3-[[5-methyl-2-(1-methylethyl)cyclohexyl]oxy]-1,2-propanediol, (-)-isopulegol and (-)-menthone. A mixture consisting of equal parts of (-)-menthol and (-)-trans- p-menthan-3,8-diol is described in Example 7 (page 15 and 16), which resulted in a :lower percentage of settlement of barnacles.

WO 99/13734 relates to a method for producing a chewing gum, as well as the chewing gum so produced, incorporates a physiological cooling agent, such as acyclic carboxamide, or combinations of physiological cooling agents.

JP 2000290151 relates to a composition, which is obtained by including (A) one or more kinds selected from capcaisin and eugenol, (B) one or more kinds selected from menthyl lactate and ketals (e.g. 1-menthone glycerol ketal or 3,3,5-trimethylcyclohexanone glycerol ketal), isopulegol, 3-L-menthoxypropane-1,2-diol and N-substituted-p-menthane-3-carboxamides and (C) menthol.

WO 94/07477 relates to an aqueous composition or final product containing thymol, which comprises sodium chloride and menthol lactate for masking the unpleasantly medicinal flavor of thymol, an essential oil with antimicrobial properties.

JP 11152217 relates to a composition for an oral cavity containing (a) 4-90 wt.% foaming ingredient and (b) 0.1-5 wt.% one or more selected from a fatty acid ester having a 10-20C fatty acid moiety, methyl salicylate, eucalyptol, anethole, menthol, menthyl lactate, menthyl acetate and menthyl hexanoate.

US 6,391,886 relates to an oral composition having improved consumer aesthetics wherein the oral compositions containing therapeutical agents wherein the undesirable consumer aesthetics associated with these agents are mitigated using coolants and sweeteners.

US 6,267,974 relates to a cosmetic composition with sensate mixtures based on isopulegol, wherein the sensate composition is providing for imparting a long lasting cooling effect on the skin. The composition is a combination of menthyl lactate, isopulegol and menthoxypropanediol, the latter proving a cooling enhancing effect..

It is therefore one object of the present invention to provide paints or coating compositions with comparable or better antifouling activity, preferably over a prolonged period of time, especially 3-5 years.

### Summary of The Invention

In accordance with a first aspect, the present invention provides a (preferably non-toxic) paint or coating composition comprising
(i) menthol and / or isopulegol
   and
(ii) a compound of formula (II): 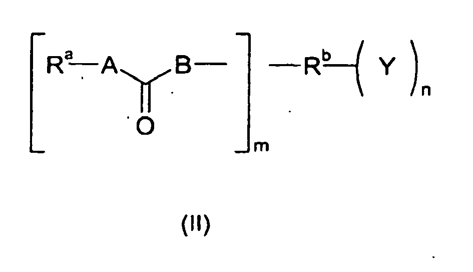 wherein
   R^{a} denotes C₄-C₂₀-alkyl, C₅-C₂₀-cycloalkyl or -heterocycloalkyl or C₅-C₂₀-alkoxy, C₆-C₁₂-aryl, C₅-C₁₀-heteroaryl or C₇-C₁₁-aralkyl,
   R^{b} denotes an m + w · n-valent aliphatic C₁-C₈ radical, a cycloaliphatic or heterocycloaliphatic C₃-C₁₅ radical, an araliphatic C₇-C₂₀ radical, an alkoxy- or acyloxy-containing aliphatic C₃-C₁₅ radical,
   A and B independently of one another denote -O-, -S- or -NH-,
   Y denotes hydroxy, C₁-C₁₀-alkoxy, C₂-C₈-acyloxy, amino, mercapto or -O-Z-O-
   Z denotes C₁-C₆-alkylene,
   w denotes the valency of the radical Y and
   m and n independently of one another denote integers from 1 to 8, with the
   proviso that the sum of m + n is not more than 12,
   and
(iii) a film forming agent.

Examples of alkyl groups include methyl, ethyl, n-propyl, isopropyl, n-butyl, sec.-butyl, isobutyl and tert.-butyl.

Examples of alkenyl groups include ethenyl, propenyl, 2-methyl propenyl, n-butenyl.

Examples of alkoxy groups include methoxy, ethoxy, n-propoxy, isopropoxy, n-butoxy, isobutoxy, sec.-butoxy, tert.-butoxy.

All of the isomeric forms of menthol and/or isopulegol and the compounds of formula (II) may be used in practicing this invention, including structural isomers and stereoisomers.

The mixture of menthol and/or isopulegol and the compounds of formula (II) is present in the coating composition in an amount effective to inhibit the attachment of biofouling organisms on a surface to which the composition is applied as a coating.

Preferably, the compound of formula (II) is present in an amount of from 0.01 to 50 percent by weight of said composition.

Also in accordance with this invention; there is provided a paint comprising the above-described paint or coating composition, preferably a marine paint.

There are also provided in accordance with this invention certain methods of use of coating materials including menthol and/or isopulegol and the compounds of formula (II). One such method involves protecting a surface exposed to an aqueous environment from fouling organisms present in the aqueous environment by applying (e. g., by brushing, spraying or dipping) to such surface a coating including menthol and/or isopulegol and at least one, i. e. one or more of the compounds of formula (II). Another method entails protecting a coated surface from attachment and growth of undesired fungal organisms, such as molds, mildew and the like by including in the coating formulation applied to such surface at least one of the above-described compounds.

As another aspect of this invention, articles are provided which have a coating of the composition described herein on at least a portion of the surface thereof, which provides protection against exposure to the deleterious effects of biofouling organisms.

The coating composition described above satisfies all of the above-noted criteria for an environmentally acceptable coating product, in that it provides effective protection against attachment and growth of biofouling organisms, while producing no known ecologically harmful effect. Moreover, menthol, isopulegol and the compounds of formula (II) have been shown to be compatible, both chemically and physically, with conventional marine and other paint formulations, are safe to handle and can be obtained at a relatively low cost.

### Detailed Description of The Invention

It has been discovered in accordance with the present invention, that the compounds of formula (II) are useful for inhibiting the attachment of biofouling organisms on surfaces, particularly those of underwater structures, to which a coating composition comprising one or more such compounds is applied, in particular when they are combined with menthol and/or isopulegol. Such a mixture or combination shows a synergistically enhanced activity in comparison with menthol and/or isopulegol.

As used herein, the term "biofouling organisms" refers to any and all organisms that participate in the fouling sequence in both saltwater and freshwater environments, including, without limitation, bacteria, diatoms, hydrids, algae, bryozoans, protozoans and macro-foulants.

The menthol according to the present invention advantageously is I-menthol or racemic menthol, preferably I-menthol.

The isopulegol according to the present invention advantageously is (-)-isopulegol or racemic isopulegol, preferably racemic isopulegol.

Particularly advantageous compounds which have been found to be effective antifouling agents for a prolonged period of time are compounds selected from formulas (IIa) to (IIj).

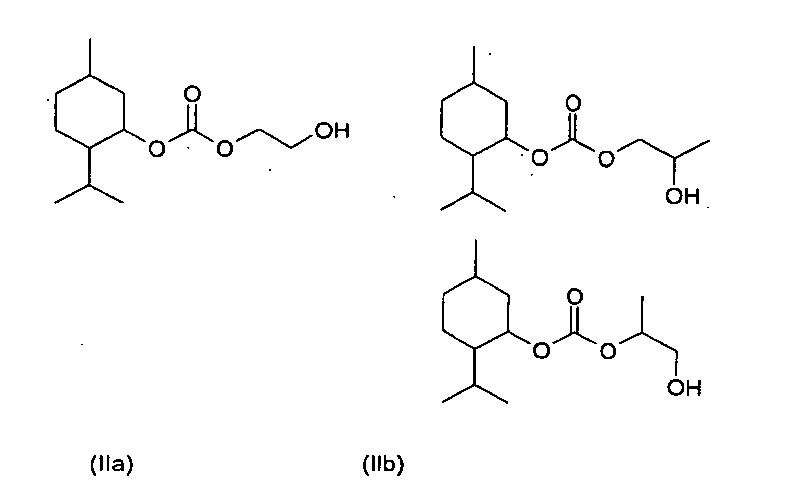

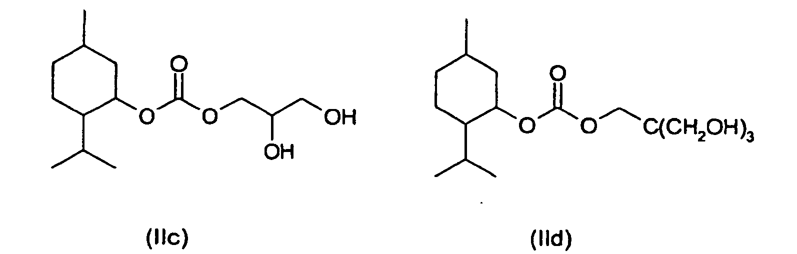

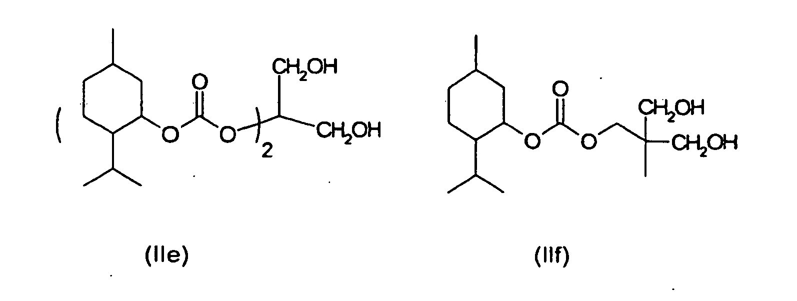

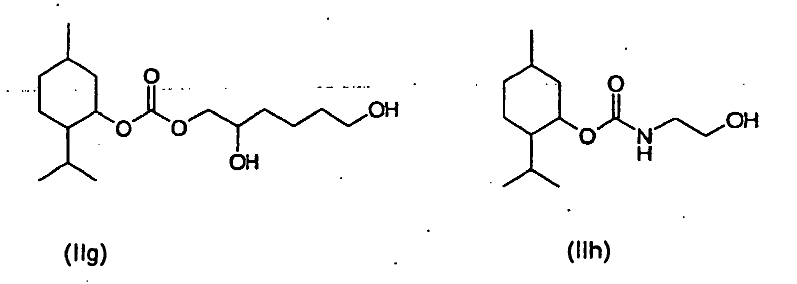

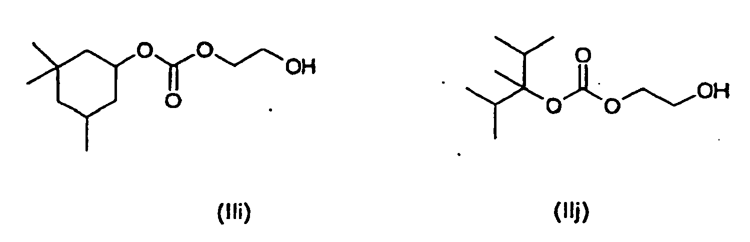

Particularly preferred are menthol glycol carbonate (IIa), menthol propyleneglycol carbonate (IIb) and menthol glycerin carbonate (IIc). Depending on the starting material and the preparation methods used, the carbonates (IIa), (IIb) and (IIc) can be used as mixtures of optical isomers or in the form of the pure isomers. Preferred are the compounds (IIa), (IIb) and (IIc) as derived from I-menthol. The compounds according to (ii) c), above, in particular the compounds of formulas (IIa) to (IIj), above, are well known and described in EP 0 583 651 incorporated herein by reference in its entirety.

The ratio by weight of menthol and/or isopulegol to the total of compounds of formula (ii) is typically between 20 : 1 and 1 : 5, preferably between 10 : 1 and 1 : 2. When menthol and isopulegol are used together in the composition, the ratio of menthol : isopulegol typically lies in the range of 1 : 10 and 10 : 1, preferably between 1 : 5 and 5 : 1.

In a preferred embodimement a combination of menthol, isopulegol and menthol propyleneglycol carbonate, is used; the ratio of isopulegol : menthol being 3 : 1 to 1 : 2, the ratio of menthol propyleneglycol carbonate : isopulegol being 2 : 1 - 1 : 5. In a particular preferred embodiment the ratio menthol propyleneglycol carbonate : isopulegol: menthol is about 1 : 2 : 1.

The compounds used in the present invention may be synthesized from readily available starting materials using known synthetic routes or are commercially available.

Optionally, the compositions according to the invention may comprise cyclic alpha-keto enamines, as described in J. Agric. Food Chem. 49, 5383-5390 (2001), preferably 5-methyl-4-(1-pyrrolidinyl)-3-[2H]-furanone, 4,5-dimethyl-3-(1-pyrrolidinyl)-2[5H]-furanone and 4-methyl-3-(1-pyrrolidinyl)-2[5H]-furanone.

Menthol and/or isopulegol and the compounds of formula (II) may be included in a conventional paint composition as the sole antifouling agent, or added in combination with other antifouling agents, biocides, antibiotics, and natural products or extracts to produce an additive or synergistic effect on attachment of biofouling organisms. Examples of (non-toxic) antifouling agents include decalactone, alpha-angelicalactone, alpha-santonin, alpha-methyl-gamma-butyrolactone and alantolactone. Exemplary biocides (fungicides and algaecides) include isothiazolones (such as Sea Nine-211), zinc omadine^{®} (2-pyridinethiol-1-oxide, zinc complex), chlorothalonil, and triazine algaecide. A typical example of a suitable antibiotic is tetracycline, which is a registered antifoulant.

Menthol and/or isopulegol and the compounds of formula (II) may also be combined with organometallic antifoulants, such as tributyl tin or triphenyl tin, or inorganic antifoulants such as zinc oxide or cuprous oxide, to reduce the total amount of (such) toxic antifoulants in a given coating material.

The film-forming component of the composition of the present invention may be any component or combination of components that is readily applied and adheres to the surface to be protected when the surface is submerged. The specific film-forming component to be selected for a particular application will vary depending on the material and construction of the article to be protected and the performance requirements thereof. After a surface is provided with a protective coating in accordance with this invention, the active ingredients menthol and/or isopulegol and at least one compound of formula (II) that are present in the coating comes in contact with biofouling organisms, thereby preventing their attachment. A variety of synthetic polymers are useful for this purpose. Examples of suitable polymer resins include unsaturated polymer resins, vinyl ester, vinyl acetate, and vinyl chloride based resins and urethane based resins. Unsaturated polyester resins are formed from unsaturated acids and anhydrides, saturated acids and anhydrides, glycols, and glycol monomers. Preferred film-forming components are mixtures of natural rosin and vinyl chloride-vinyl acetate co-polymers. A commercial marine paint vehicle which is suitable for the practice of this invention is Amerlock 698, a product of Ameron International, Pasadena, CA. Comparable marine paint vehicles are also available from Jotan, AS, Sandefjord, Norway.

The coating composition of the invention may include components in addition to menthol and/or isopulegol and the compounds of formula (II) and a film-forming component, so as to confer one or more desirable properties, such as increased or decreased hardness, strength, increased or decreased rigidity, reduced drag, increased or decreased permeability, or improved water resistance. The selection of a particular component or group of components to impart such properties are within the capabilities of those having ordinary skill in the art.

The coating composition of the present invention may be used in various paint formulations, marine paints being preferred.

The percentage of the active agent (be it a single compound or a mixture), i.e. one or more of the compounds of formula (II) and, preferably, menthol and/or isopulegol, in the coating composition required for effective protection against biofouling agents may vary depending on the active agent itself, the chemical nature of the film former, as well as other additives present in the composition that may influence the effectiveness of the active agent. Generally, the active agent comprises between about 0.01 and about 50 percent of the coating composition by weight, and preferably between about 0.1 and about 10 percent by weight of the composition.

The compounds of formula (II) and, if present, menthol and/or isopulegol may be included in a non-toxic paint, coating composition or paint formulation during the paint/coating manufacturing processes or added to the paint/coating base mixture at the time of use. Menthol and/or isopulegol (if present) and the compounds of formula (II) can be simply mixed into the film-forming components. This is known as a "free association" coating, which allows leaching of the menthol and/or isopulegol and the compounds of formula (II) from the film-forming components. The antifouling agent may be covalently bound to the resin, known as "ablative or self-polishing coating" and is released only after the bond hydrolyzes in seawater. Controlled hydrolysis permits a slow release rate while creating a hydrophilic site on the resin. A new layer of bound menthol and/or isopulegol and compounds of formula (II) is then exposed when the hydrolyzed layer is washed away. See also, Tiller et al. in Proc. Natl. Acad. Sci., 2001, 98, 5981-5985, the entire contents of which are incorporated by reference herein. Furthermore, menthol and/or isopulegol (if present) and the compounds of formula (II) may also be incorporated with slow release materials which permit the controlled release of the compounds into the matrix of the coating, thereby prolonging the effectiveness of the coating and reducing the amount of compounds necessary to produce the antifouling effect. Encapsulation into such slow release materials also protects menthol and/or isopulegol and the compounds of formula (II) from the harsh chemical milieu of the coating and would reduce degradation of the compounds while trapped in the resin, if they were susceptible to degradation. Examples of these slow release materials include: a) microcylinders composed of metallic cylinders or modified molecules such as 1,2-bis-(10,12-tricosadinoyl)-glycer-3-phosphocholine; (b) liposomes; and (c) cyclodextrins.

While not wishing to be bound to a specific theory regarding the mechanism of action, it is believed that the active agent of the coating composition of this invention, i.e. menthol and/or isopulegol and at least one of the compounds of formula (II) function by producing an environment at the surface of a coated substrate which repels biofouling organisms, thereby preventing their attachment and growth on the coated surface. In this connection, it is conjectured that the menthol and/or isopulegol and the compounds of formula (II) act as antifoulants by interacting with the cold receptors of the fouling organisms to induce chemotaxis. It is believed that this interaction need not be permanent, and accordingly there is no need for the menthol and/or isopulegol and the compounds of formula (II) to be irreversibly consumed in order to exhibit antifoulant activity. It would therefore be desirable to attach the menthol and/or isopulegol and the compounds of formula (II) covalently to the film-forming agent, thereby obtaining a coating whose antifoulant ingredient will not be released into the marine environment. The inhibitory effect on the microorganisms may, however, be produced by inhalation, respiration, digestion or imbibition of the active agent by the microorganisms.

Also within the scope of this invention is any article having a surface coated with a coating containing (i) menthol and/or isopulegol, (ii) at least one compound of formula (II) and (iii) a film forming agent. The coated articles of the invention can comprise any material to which biofouling organisms are prone to attach, such as metal, wood, concrete, plastic, composite and stone. Representative examples of articles which may benefit from a coating which inhibits attachment and growth of such organisms include boats and ships, and particularly their hulls, fishing nets, berthing facilities, such as piers and pilings, buoys, offshore rigging equipment, intake screens for water distribution systems and decorative or functional cement or stone formations.

Further aspects of the present invention are the following:
- The use of a compound of formula (II) as antifouling agent.
- The use of (a) a compound of formula (II) or (b) a paint or coating composition of the present invention or (c) a paint according to the present invention for protecting a surface exposed to an aqueous environment from fouling organisms present in said aqueous environment.
- The use of a compound of formula (II) for producing a marine paint composition for protecting a surface exposed to an aqueous environment from fouling organisms present in said aqueous environment.
- In the uses stated before the compound is preferably selected from the group consisting of menthol glycol carbonate (IIa), menthol propyleneglycol carbonate (IIb), menthol glycerin carbonate (IIc), I-menthyllactate, menthone glycerin- acetal, N-ethyl-p-menthane-3-carboxamide, 2-isopropyl-N-2,3-trimethylbutanamide, menthyl methoxyacetate, menthyl 3,6-dioxaheptanoate, and mixtures thereof.
- A marine paint composition comprising
   a) one or more compounds of formula (II),
   b) a film forming agent,
   c) optionally, one or more typical additives, and
   d) optionally, menthol and / or isopulegol,
wherein the total amount of components a) and, if present, d) is effective for inhibiting or preventing fouling organisms, when the marine paint is applied to a substrate and the substrate is thereafter exposed to sea water.

Further aspects of the invention are stated in the attached claims.

The use of a mixture of (a) one or more compounds of formula (II) and (b) menthol and / or isopulegol is preferred as such mixture shows a synergistically enhanced activity (see Example 2 below).

The following examples are provided to describe the invention in further detail. These examples are intended merely to illustrate specific embodiments of the compositions, methods and coated articles of the invention, and should in no way be construed as limiting the invention. These examples provide the results of tests conducted to determine the efficacy of certain compounds of the invention in inhibiting settlement of biofouling organisms.

### EXAMPLE 1

### Antifouling Test Methods

### a. Collection and Culture of Barnacles

Adults of the barnacle, *Balanus amphitrite* Darwin, were collected from the Sacred Heart Marine Research Center at St. Mary's College in Tuticorin, India. The barnacles were crushed and the nauplius stage larvae were collected for culture to the cyprid stage following the method of Rittschof et al., J.Exp. Mar. Biol. Ecol., 82:131-146 (1984). The cyprid is the stage at which the barnacle larva is competent to attach to surfaces. Upon attachment to a surface, the larva then undergoes metamorphosis into a barnacle.

### b. Settlement Assay

Barnacle settlement assays were undertaken using the method described previously by Rittschof et al., J.Chem. Ecol., 11: 551-563 (1985). Briefly, Falcon 50x9 mm plastic petri dishes were filled with 5 ml of filtered seawater at salinity of 33-35 parts per thousand (ppt) and into which 3-day old cyprid stage larvae were added. Menthol and/or isopulegol and/or compounds of formula (II) were introduced at various concentrations into the dishes containing seawater. Controls were represented by those dishes in which no test compound were added. After incubation at 28°C for 9 hours, the dishes were examined under a dissecting microscope to determine if there was any mortality. The larvae were then killed with 10% formalin and the number of attached and unattached larvae were counted. Settlement data were expressed as the percentage of the larvae attached to the bottom of the dish.

The settlement assay was used to determine the effective concentration of a number of different compounds of formula (II). The effective concentration (EC₅₀) is that concentration which inhibited the settlement of fifty percent (50%) of the cyprid stage of the barnacle larvae present in a test sample. The results are shown in Table II and Table III.

The racemic (±) compounds are denoted with the-prefix rac-.

**TABLE I**

| **COMPOUND** | **EC₅₀ (mg/ml)** | |
|---|---|---|
| 1R,2S,5R-(-)-menthol (= I-menthol) | 4 * 10⁻³ | (see WO 01/95718) |
| 1S,2R,5S-(+)-menthol | 0.1 | (see WO 01/95718) |
| rac-menthol | 0.1 | (see WO 01/95718) |
| (-)-isopulegol | 8.8 * 10⁻⁵ | (see WO 01/95718) |
| rac-isopulegol | 2,9 * 10⁻⁵ | |
| I-menthyl propyleneglycol carbonate | 2.2 * 10⁻⁶ | |

**TABLE II**

| **COMPOUNDS** | **ratio by weight** | **EC₅₀ (mg/ml)** |
|---|---|---|
| I-menthol / rac-isopulegol | 50 : 50 | 1.8 * 10⁻⁵ |

### EXAMPLE 2

### Inhibition of Fouling Organisms Usinga Marine Paint Composition Containing

### (-)-menthol, rac-isopulegol and I-menthol propyleneglycol carbonate Separately and in Combination

A floating platform was constructed using layers of bamboo and styrofoam floats. The platform was designed with holders to accommodate test panels measuring 4 inches x 12 inches x 0.25 inches (1 inch =2.54 cm).

A first experimental paint was prepared, containing a biocidally effective amount of cuprous oxide and no other biocide which was used as the control. This composition consisted of 40 parts by weight of cuprous oxide, 10 parts by weight of iron oxide red, 5 parts by weight of xylene, 10 parts by weight of butyl alcohol, 5 parts by weight polyamide resin, 6 parts by weight of plasticizer. To this composition was added a combination of 0.5% by weight of rac-isopulegol, 0.25% by weight of (-)-menthol and 0.25% by weight of 1-menthol propyleneglycol carbonate (Composition A). A second paint composition was prepared from the same marine paint vehicle containing cuprous oxide, to which was added 2% by weight of (-)-menthol (Composition B). A third formulation was made from the same cuprous oxide-containing marine paint vehicle, to which was added 2% by weight of rac-isopulegol (Composition C). A fourth formulation was made from the same cuprous oxide-containing marine paint vehicle, to which was added 2% by weight of I-menthol propyleneglycol carbonate (Composition D).

Solid iron panels having the above-mentioned dimensions were painted with the paint formulations thus prepared, placed in the holders in the floating platform and submerged continuously near the center of Bitac Cove in San Dionisio Bay (Philippines) for a period of 78 weeks. The panels were examined for a few minutes every three months and immediately resubmerged after photography. After 78 weeks, the panels were removed and inspected. The numbers of barnacles attached to the panels were counted. The major fouling organisms included the barnacle, *Balanus amphitrite* communis, and the rock oyster, *Crossostrea cuculata.*

The data obtained are set forth in Table III below. These data show that rac-isopulegol, (-)-menthol and I-menthol propyleneglycol carbonate each are effective antifouling agents with settlement rates of 16.1%, 12.2% and 23.4%, respectively. When the three compounds were used in combination at the lower concentrations of 0.5% and 0.25% respectively the protective effect was more evident, with a settlement rate of 2.0%.

**TABLE III**

| | | **Concentration (% by weight)** | | |
|---|---|---|---|---|
| **PAINT COMPOSITION** | **racemic isopulegol** | **(-)-menthol** | **1-menthol propyleneglycol carbonate** | **% Settlement** |
| CONTROL | 0 | 0 | 0 | 100 |
| COMPOSITION A. | 0.5 | 0.25 | 0.25 | 2.0 |
| COMPOSITION B | - | 2.0 | - | 16.1 |
| COMPOSITION C | 2.0 | - | - | 12.2 |
| COMPOSITION D | - | - | 2.0 | 23.4 |

The foregoing example clearly demonstrates that the compositions of the present invention containing menthol and/or isopulegol and compounds of formula (II) are effective in preventing the attachment of fouling marine algae and planktonic organisms on the surfaces of underwater structures to which the composition is applied as a coating. These data further show the long lasting activity of the compositions of the invention and the synergistic effect of the components on each other.

## Claims

1. A paint or coating composition comprising
(i) menthol and / or isopulegol,
(ii) a compound of formula (II) 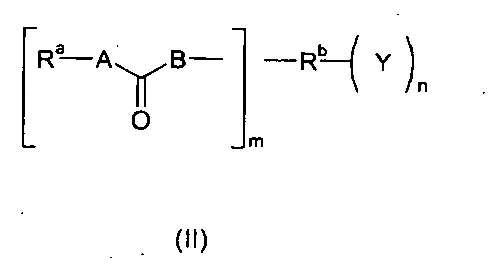 wherein
R^{a} denotes C₄-C₂₀-alkyl, C₅-C₂₀-cycloalkyl or -heterocycloalkyl or C₅-C₂₀-alkoxy, C₆-C₁₂-aryl, C₅-C₁₀-heteroaryl or C₇-C₁₁-aralkyl;
R^{b} denotes an m + w · n-valent aliphatic C₁-C₈ radical, a cycloaliphatic or heterocycloaliphatic C₃-C₁₅ radical, an araliphatic C₇-C₂₀ radical, an alkoxy- or acyloxy-containing aliphatic C₃-C₁₅ radical;
A and B independently of one another denote -O-, -S- or -NH-;
Y denotes hydroxy, C₁-C₁₀-alkoxy, C₂-C₆-acyloxy, amino, mercapto or -O-Z-O-;
Z denotes C₁-C₆-alkylene;
w denotes the valency of the radical Y and
m and n independently of one another denote integers from 1 to 8, with the proviso that the sum of m + n is not more than 12, and
(iii) a film forming agent.

2. A composition according to claim 1, wherein said compound of formula (II) is present in an amount from 0.01 to 50 percent by weight of said composition.

3. A composition according to claim 1 or 2, wherein the compound of formula (II) are menthol glycol carbonate (IIa), menthol propyleneglycol carbonate (IIb) and menthol glycerin carbonate (IIc).

4. A composition according to any preceding claim, comprising menthol, isopulegol and menthol propyleneglycol carbonate.

5. A paint comprising a composition according to any preceding claim.

6. A paint according to claim 5, which is formulated as a marine paint.

7. Use of a composition according to any of claims 1-4 or a paint according to claim 5 or 6 for protecting a surface exposed to an aqueous environment from fouling organisms present in said aqueous environment.

8. A method for protecting a surface exposed to an aqueous environment from fouling organisms present in said aqueous environment, which comprises applying to said surface a coating including menthol and/or isopulegol and at least one compound of formula (II) as defined in claim 1.

9. A method according to claim 8, wherein said coating composition is applied to said surface by brushing, spraying or dipping.

10. An article having an underwater surface, at least a portion of said surface being coated with a composition according to any of claims 1-4 or a paint according to claim 5 or 6.

11. An article according to claim 10 in the form of a ship hull or fishing net.

12. Use of a compound of formula (II) as defined in claim 1 as antifouling agent.

13. Use of a compound of formula (II) as defined in claim 1 for protecting a surface exposed to an aqueous environment from fouling organisms present in said aqueous environment.

14. Use of a compound of formula (II) as defined in claim 1 for producing a marine paint composition for protecting a surface exposed to an aqueous environment from fouling organisms present in said aqueous environment.

15. Use of a compound of formula (II) as defined in claim 1 for synergistically enhancing the antifouling effect of (a) menthol, (b) isopulegol or (c) a mixture of menthol and isopulegol.

16. Use according to any of claims 12-15, wherein the compound of formula (II) as defined in claim 1 is selected from the group consisting of menthol glycol carbonate (IIa), menthol propyleneglycol carbonate (IIb), menthol glycerin carbonate (IIc), and mixtures thereof.

17. Marine paint composition comprising
a) one or more compounds of formula (II) as defined in claim 1,
b) a film forming agent,
c) optionally, one or more typical additives, and
d) optionally, menthol and / or isopulegol,
wherein the total amount of components a) and, if present, d) is effective for inhibiting or preventing fouling organisms, when the marine paint is applied to a substrate and the substrate is thereafter exposed to sea water.

## Patentansprüche

1. Farb- oder Beschichtungszusammensetzung, umfassend
(i) Menthol und/oder Isopulegol,
(ii) eine Verbindung der Formel (II) 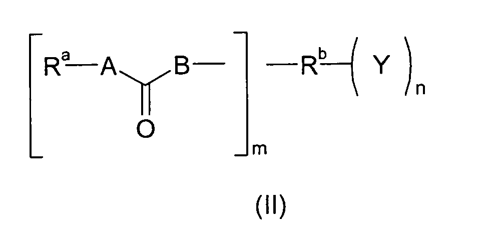 wobei
R^{a} bedeutet: C₄-C₂₀-Alkyl, C₅-C₂₀-Cycloalkyl oder -heterocycloalkyl oder C₅-C₂₀-Alkoxy, C₆-C₁₂-Aryl, C₅-C₁₀-Heteroaryl oder C₇-C₁₁-Aralkyl;
R^{b} bedeutet: ein m + w · n-valentes aliphatisches C₁-C₈-Radikal, ein cycloaliphatisches oder heterocycloaliphatisches C₃-C₁₅-Radikal, ein araliphatisches C₇-C₂₀-Radikal, ein Alkoxy- oder Acyloxy-enthaltendes aliphatisches C₃-C₁₅-Radikal;
A und B bedeuten, unabhängig voneinander, -O-, -S- oder -NH-;
Y bedeutet Hydroxy, C₁-C₁₀-Alkoxy, C₂-C₆-Acyloxy, Amino, Mercapto oder -O-Z-O;
Z bedeutet C₁-C₆-Alkylen;
w bedeutet die Valenz des Y-Radikals und
m und n bedeuten, unabhängig voneinander, Ganzzahlen von 1 bis 8, mit der Maßgabe, dass die Summe von m + n nicht größer als 12 ist, und
(iii) einen Filmbildner.

2. Zusammensetzung nach Anspruch 1, wobei die Verbindung der Formel (II) in einem Anteil von 0,01-50 Gew.-% in der Zusammensetzung enthalten ist.

3. Zusammensetzung nach Anspruche 1 oder 2, wobei die Verbindung der Formel (II) Mentholglycolcarbonat (IIa), Mentholpropylenglycolcarbonat (IIb) oder Mentholglycerincarbonat (IIc) ist.

4. Zusammensetzung nach einem der vorherigen Ansprüche, umfassend Menthol, Isopulegol und Mentholpropylenglycolcarbonat.

5. Farbe, umfassend eine Zusammensetzung nach einem der vorherigen Ansprüche.

6. Farbe nach Anspruch 5, wobei die Farbe als wassertaugliche Farbe formuliert ist.

7. Verwendung einer Zusammensetzung nach einem der Ansprüche 1 bis 4 oder einer Farbe nach Anspruch 5 oder 6 zum Schützen einer gegen eine Wasserumgebung exponierte Oberfläche vor Fouling-Organismen der Wasserumgebung.

8. Verfahren zum Schützen einer gegen eine Wasserumgebung exponierte Oberfläche vor Fouling-Organismen der Wasserumgebung, umfassend das Aufbringen einer Beschichtung umfassend Menthol und/oder Isopulegol und zumindest einer Verbindung der Formel (II) wie in Anspruch 1 definiert.

9. Verfahren nach Anspruch 8, wobei die Beschichtungszusammensetzung auf die Oberfläche aufgebracht wird durch Anstreichen, Sprühen oder Eintauchen.

10. Artikel mit einer Unterwasseroberftäche, wobei zumindest ein Abschnitt der Oberfläche beschichtet ist mit einer Zusammensetzung gemäß einem der Ansprüche 1 bis 4 oder einer Farbe gemäß Anspruch 5 oder 6.

11. Artikel gemäß Anspruch 10 in Form eines Schiffsrumpfes oder Fischernetzes.

12. Verwendung einer Verbindung der Formel (II) wie in Anspruch 1 definiert als Antifoulingmittel.

13. Verwendung einer Verbindung der Formel (11) wie in Anspruch 1 definiert zum Schützen einer gegen eine Wasserumgebung exponierte Oberfläche vor Fouling-Organismen der Wasserumgebung.

14. Verwendung einer Verbindung der Formel (II) wie in Anspruch 1 definiert zum Herstellen einer wassertauglichen Farbzusammensetzung zum Schützen einer gegen eine Wasserumgebung exponierte Oberfläche vor Fouling-Organismen der Wasserumgebung.

15. Verwendung einer Verbindung der Formel (II) wie in Anspruch 1 definiert zum synergistischen Verstärken des Antifouling-Effekts von (a) Menthol, (b) Isopulegol oder (c) einer Mischung von Menthol und Isopulegol.

16. Verwendung nach einem der Ansprüche 12 bis 15, wobei die Verbindung der Formel (II) wie in Anspruch 1 definiert ausgewählt ist aus der Gruppe bestehend aus Mentholglycolcarbonat (IIa), Mentholpropylenglycolcarbonat (IIb), Mentholglycerincarbonat (IIc) und Mischungen derselben.

17. Wassertaugliche Farbzusammensetzung, umfassend
a) eine oder mehrere Verbindungen der Formel (II) wie in Anspruch 1 definiert,
b) einen Filmbildner,
c) optional ein oder mehrere übliche Additive, und
d) optional Menthol und/oder Isopulegol,
wobei die Gesamtmenge der Verbindungen a) und, soweit vorhanden, d) wirksam ist zum Inhibieren oder Verhindern von Fouling-Organismen, wobei die wassertaugliche Farbe auf ein Substrat appliziert wird und das Substrat anschließend Seewasser ausgesetzt wird.

## Revendications

1. Composition de peinture ou de revêtement comprenant
(i) du méthanol et/ou de l'isopulégol,
(ii) un composé de formule (II) 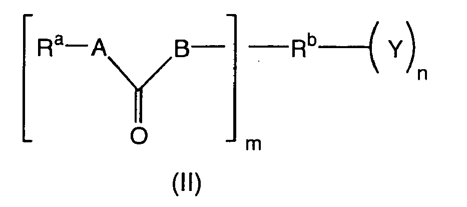 dans laquelle
R^{a} signifie un radical alkyle en C₄-C₂₀, cycloalkyle ou hétérocycloalkyle en C₅-C₂₀ ou alcoxy en C₅-C₂₀, aryle en C₆-C₁₂, hétéroaryle en C₅-C₁₀ ou aralkyle en C₇-C₁₁;
R^{b} signifie un radical aliphatique en C₁-C₈ m + w · n valent, un radical cycloaliphatique ou hétérocycloaliphatique en C₃-C₁₅, un radical araliphatique en C₇-C₂₀, un radical aliphatique en C₃-C₁₅ contenant un radical alcoxy ou acyloxy;
A et B indépendamment l'un de l'autre signifient -O-, -S- ou -NH-;
Y signifie un radical hydroxy, alcoxy en C₁-C₁₀, acyloxy en C₂-C₆, amino, mercapto ou -O-Z-O-;
Z signifie un radical alkylène en C₁-C₆;
w signifie la valence du radical Y et
m et n indépendamment l'un de l'autre signifient des nombres entiers de 1 à 8, avec la condition que la somme de m + n ne soit pas supérieure à 12, et
(iii) un agent filmogène.

2. Composition selon la revendication 1, dans laquelle ledit composé de formule (11) est présent en une quantité de 0,01 à 50 pour-cent en poids de ladite composition.

3. Composition selon la revendication 1 ou 2, dans laquelle le composé de formule (II) est le carbonate de menthol glycol (IIa), le carbonate de menthol propylèneglycol (IIb) et le carbonate de menthol glycérine (IIc).

4. Composition selon l'une quelconque des revendications précédentes, comprenant le menthol, l'isopulégol et le carbonate de menthol propylèneglycol.

5. Peinture comprenant une composition selon l'une quelconque des revendications précédentes.

6. Peinture selon la revendication 5, qui est formulée comme peinture marine.

7. Utilisation d'une composition selon l'une quelconque des revendications 1 à 4 ou d'une peinture selon la revendication 5 ou 6 pour la protection d'une surface exposée à un environnement aqueux des organismes d'encrassement présents dans ledit environnement aqueux.

8. Procédé de protection d'une surface exposée à un environnement aqueux des organismes d'encrassement présents dans ledit environnement aqueux, qui comprend l'application à ladite surface d'un revêtement comprenant du menthol et/ou de l'isopulégol et au moins un composé de formule (II) telle que définie dans la revendication 1.

9. Procédé selon la revendication 8, dans lequel ladite composition de revêtement est appliquée à ladite surface par brossage, pulvérisation ou trempage.

10. Article ayant une surface sous l'eau, au moins une partie de ladite surface étant revêtue d'une composition selon l'une quelconque des revendications 1 à 4 ou d'une peinture selon la revendication 5 ou 6.

11. Article selon la revendication 10 sous la forme d'une coque de bateau ou d'un filet de pèche.

12. Utilisation d'un composé de formule (II) telle que définie dans la revendication 1 comme agent anti-encrassement.

13. Utilisation d'un composé de formule (II) telle que définie dans la revendication 1 pour la protection d'une surface exposée à un environnement aqueux contre des organismes d'encrassement présents dans ledit environnement aqueux.

14. Utilisation d'un composé de formule (II) telle que définie dans la revendication 1 pour produire une composition de peinture marine pour la protection d'une surface exposée à un environnement aqueux contre des organismes d'encrassement présents dans ledit environnement aqueux.

15. Utilisation d'un composé de formule (II) telle que définie dans la revendication 1 pour augmenter de manière synergique l'effet anti-encrassement de (a) le menthol, (b) l'isopulégol ou (c) un mélange de menthol et d'isopulégol.

16. Utilisation selon l'une quelconque des revendications 12 à 15, dans laquelle le composé de formule (II) telle que définie dans la revendication 1 est choisi dans le groupe constitué par le carbonate de menthol glycol (IIa), le carbonate de menthol propylèneglycol (IIb), le carbonate de menthol glycérine (IIc), et leurs mélanges.

17. Composition de peinture marine comprenant
a) un ou plusieurs composés de formule (li) telle que définie dans la revendication 1,
b) un agent filmogène,
c) éventuellement un ou plusieurs additifs typiques, et
d) éventuellement le mentol et/ou l'isopulégol,
dans laquelle la quantité totale des composés a) et, s'ils sont présents, d) est efficace pour inhiber ou empêcher les organismes d'encrassement, quand la peinture marine est appliquée à un substrat et que le substrat est ensuite exposé à l'eau de mer.
